# EUROPÄISCHE PATENTSCHRIFT

(11) **EP 1 048 617 B1**
(45) Veröffentlichungstag und Bekanntmachung des Hinweises auf die Patenterteilung: **07.12.2005**
(21) Anmeldenummer: 00104675.4
(22) Anmeldetag: 03.03.2000
(51) Int. Cl.: C01B 33/26, C01F 7/02, C09K 3/14, C04B 35/626

(54) **Silicium-Aluminium-Mischoxid, Verfahren zur dessen Herstellung und die Verwendung des Mischoxids**
Silicon aluminium mixed oxide, process for its preparation and the use thereof
Oxyde mixte de silicium et d'aluminium, procédé de sa préparation et son utilisation

(30) Priorität: 30.04.1999 DE 19919635
(43) Veröffentlichungstag der Anmeldung: 02.11.2000
(73) Patentinhaber: Degussa AG, 40474 Düsseldorf (DE)
(72) Erfinder: Mangold, Helmut, 63517 Rodenbach (DE); Golchert, Rainer, 64807 Dieburg (DE); Deller, Klaus, 63515 Hainburg (DE); Kerner, Dieter, 63540 Hanau (DE)

(56) Entgegenhaltungen:
- EP-A- 0 023 588
- EP-A- 0 554 908
- EP-A- 0 585 544
- US-A- 4 960 738
- US-A- 5 384 306

## Beschreibung

Die Erfindung betrifft ein Silicium-Aluminium-Mischoxid, ein Verfahren zu seiner Herstellung sowie die Verwendung als Poliermittel in Dispersionen, die zum Polieren von elektronischen Bauteilen insbesondere für CMP-Anwendungen benutzt werden.

Aus der Patentschrift EP-0 585 544 sind flammenhydrolytisch hergestellte pulverförmige Silicium-Aluminium-Mischoxide amorpher Struktur mit einer Zusammensetzung von 65 bis 72,1 Gew.% Al₂O₃ und 27,9 bis 35 Gew.% SiO₂ und einer BET-Oberfläche zwischen 20 und 200 m2/g bekannt.

Gegenstand der Erfindung ist ein flammenhydrolytisch hergestelltes Silicium-Aluminium-Mischoxid-Pulver mit einer Zusammensetzung von 1 bis 99,999 Gew.% Al₂O₃, vorzugsweise 40 bis 80 Gew.-% Al₂O₃, Rest SiO₂, welches dadurch gekennzeichnet ist, daß es im Röntgendiffraktogramm eine amorphe Struktur aufweist, und aus zusammengewachsenen Primärteilchen besteht, wobei in diesen Primärteilchen Kristallite vorliegen, und diese Kristallite Größen zwischen einem und 200 Nanometer aufweisen und die spezifische Oberfläche des Pulver zwischen 5 und 300 m²/g, vorzugsweise 50 bis 150 m²/g, liegt.

Ein weiterer Gegenstand der Erfindung ist ein Verfahren zur Herstellung des flammenhydrolytisch hergestellten erfindungsgemäßen Silicium-Aluminium-Oxid-Pulvers, welches dadurch gekennzeichnet ist, daß man Silicium- und Aluminiumhalogenide in einem bestimmten Verhältnis zueinander verdampft, und mit einem Traggas in einer Mischeinheit mit Luft, Sauerstoff und Wasserstoff homogen mischt, diese Mischung in einem Brenner bekannter Bauart ohne Zufuhr von Blendenluft mittels einer Ringdüse verbrennt, und nach der Abtrennung der Feststoffe von der Gasphase gegebenenfalls am Produkt anhängende Halogenidreste durch einen weiteren Verfahrensschritt mit feuchter Luft bei erhöhter Temperatur abtrennt.

Es hat sich nun gezeigt, daß die erfindungsgemäßen Silicium-Aluminium-Mischoxide, die zu einer Dispersion verarbeitet werden, hervorragende Eigenschaften als Poliermittel aufweisen.

Insbesondere können diese Dispersionen zum Polieren in der Elektronikindustrie (CMP) eingesetzt werden.

Das erfindungsgemäße Silicium-Aluminium-Mischoxid kann weiterhin als Füllstoff, als Trägermaterial, als katalytisch aktive Substanz, als keramischer Grundstoff, in der Elektronikindustrie, als Füllstoff für Polymere, als Ausgangsstoff zur Herstellung von Glas oder Glasbeschichtungen oder Glasfasern, als Trennhilfsmittel, in der Kosmetikindustrie, als Absorbermaterial, als Additiv in der Silikon- und Kautschukindustrie, zur Einstellung der Rheologie von flüssigen Systemen, zur Hitzeschutzstabilisierung, als Wärmedämmaterial, als Fließhilfsmittel, in der Dentalindustrie, als Hilfsstoff in der pharmazeutischen Industrie, in der Lackindustrie, bei PET-Film-Anwendungen, in Fluoreszenz-Röhren, als Ausgangsstoff zur Herstellung von Filterkeramiken oder Filtern, in Tonerpulvern, als Rostschutzmittel, als Mittel zum Film-Coaten von Polyethylen (PET) und Polyvinylacetat, in Tinten, in Batterieseparatoren eingesetzt werden.

### Beispiele

Entsprechend der im Beispiel 1 der EP-0 585 544 beschriebenen bekannten Brenneranordnung werden folgende Mengen zur Herstellung des Mischoxids vorgegeben:

### Beispiel 1:

Es werden 1,6 Nm³/h Kern-oder Reaktionswasserstoff zusammen mit 5 Nm³/h Luft und 1,70 kg/h zuvor verdampftem SiCl₄ vermischt. In diese etwa 200 °C heiße Mischung werden weiterhin 2,5 kg/h gasförmiges AlCl₃ (das zuvor bei etwa 300°C verdampft wurde) zusätzlich eingespeist. Diese Mischung wird in einem Flammrohr verbrannt, wobei in dieses Flammrohr zusätzlich 12 Nm³/h Luft eingespeist werden.

Nach dem Passieren des Flammrohrs wird das entstehende Pulver in einem Filter oder Zyklon von den salzsäurehaltigen Gasen getrennt, und anhaftende Salzsäurereste werden durch Behandlung bei erhöhter Temperatur vom entstandenen Mischoxid abgetrennt.

Das Mischoxid weist dabei folgende analytischen Daten auf:

Spezifische BET-Oberfläche 56 m²/g, pH einer 4-prozentigen Dispersion 4,52, Schüttgewicht 49 g/l, Stampfgewicht 59 g/l. Zusammensetzung des Pulvers: 63,6 Gew.% Al₂O₃, 36,3 Gew.% SiO₂.

### Beispiel 2:

Es werden 1,2 Nm³/h Kern-oder Reaktionswasserstoff zusammen mit 6 Nm³/h Luft und 1,70 kg/h zuvor verdampftem SiCl₄ vermischt. In diese etwa 200°C heiße Mischung werden weiterhin 2,5 kg/h gasförmiges AlCl₃ (das zuvor bei etwa 300°C verdampft wurde) zusätzlich eingespeist. Diese Mischung wird in einem Flammrohr verbrannt, wobei in dieses Flammrohr zusätzlich 12 Nm³/h Luft eingespeist werden.

Nach dem Passieren des Flammrohrs wird das entstehende Pulver in einem Filter oder Zyklon von den salzsäurehaltigen Gasen getrennt, und anhaftende Salzsäurereste werden durch Behandlung bei erhöhter Temperatur vom entstandenen Mischoxid abgetrennt.

Das Mischoxid weist dabei folgende analytischen Daten auf:

Spezifische BET-Oberfläche 99 m²/g, pH einer 4-prozentigen Dispersion 3,9, Schüttgewicht 39 g/l, Stampfgewicht 48 g/l. Zusammensetzung des Pulvers: 64,3 Gew.% Al₂O₃, 35,52 Gew.% SiO₂.

Weitere Charakterisierung der Pulver:

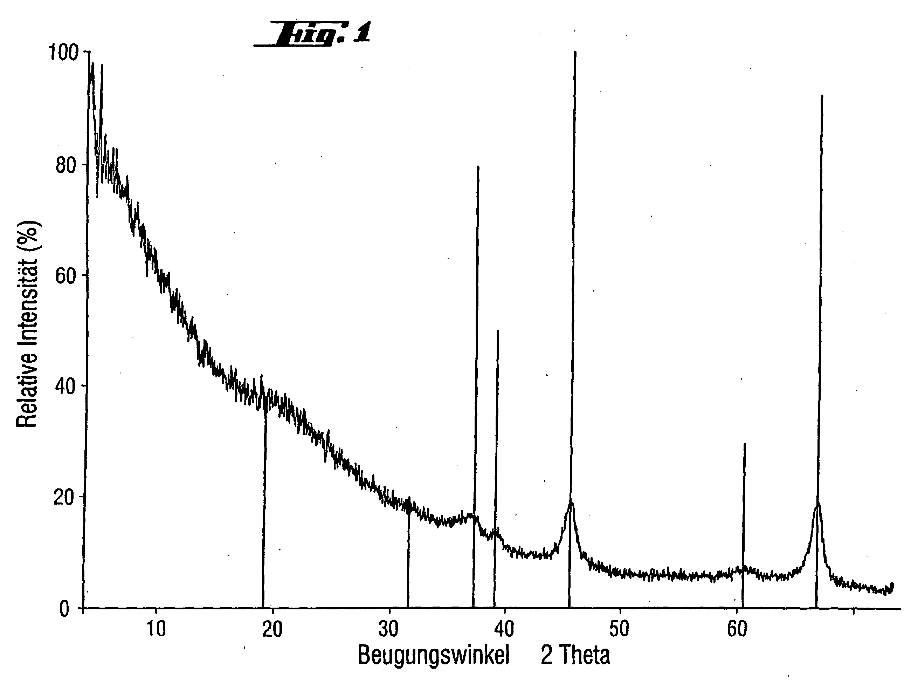

Die Pulver weisen folgende Besonderheit auf: Die Röntgendiffraktogramme dieser Pulver (Figur 1 von Beispiel 1) zeigen, daß praktisch keine kristallinen Phasen im Pulver vorhanden sind.

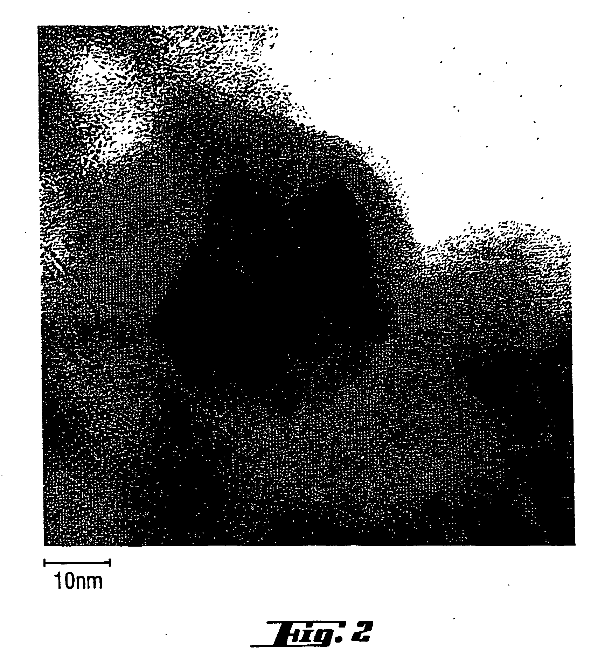

Gleichzeitig zeigt jedoch eine hochauflösende elektronenmikroskopische Aufnahme, daß in den Primärpartikeln der Pulver teilkristalline Bereiche vorliegen, die wahrscheinlich für das gute Polierverhalten der aus diesen Mischoxiden hergestellten Dispersionen verantwortlich sind (Figur 2).

## Patentansprüche

1. Flammenhydrolytisch hergestelltes Silicium-Aluminium-Mischoxid-Pulver mit einer Zusammensetzung von 1 bis 99,999 Gew.% Al₂O₃, Rest SiO₂, **dadurch gekennzeichnet, daß** es im Röntgendiffraktogramm eine amorphe Struktur aufweist, und aus zusammengewachsenen Primärteilchen besteht, wobei in diesen Primärteilchen Kristallite vorliegen, und diese Kristallite Größen zwischen einem und 200 Nanometer aufweisen und die spezifische Oberfläche des Pulver zwischen 5 und 300 m²/g liegt.

2. Verfahren zur Herstellung des flammenhydrolytisch hergestellten Silicium-Aluminium-Mischoxides nach Anspruch 1, **dadurch gekennzeichnet, daß** man Silicium- und Aluminiumhalogenide in einem bestimmten Verhältnis zueinander verdampft, und mit einem Traggas in einer Mischeinheit mit Luft, Sauerstoff und Wasserstoff homogen mischt, diese Mischung in einem Brenner bekannter Bauart ohne Zufuhr von Blendenluft mittels einer Ringdüse verbrennt, und nach der Abtrennung der Feststoffe von der Gasphase gegebenenfalls am Produkt anhängende Halogenidreste durch einen weiteren Verfahrensschritt mit feuchter Luft bei erhöhter Temperatur abtrennt.

3. Verwendung des flammenhydrolytisch hergestellten Silicium-Aluminium-Mischoxides nach Anspruch 1 zur Herstellung von Dispersionen, die zum Polieren insbesondere in der Elektronikindustrie (CMP) eingesetzt werden.

4. Verwendung des flammenhydrolytisch hergestellten Silicium-Aluminium-Mischoxides nach Anspruch 1 als Füllstoff, als Trägermaterial, als katalytisch aktive Substanz, als keramischer Grundstoff, in der Elektronikindustrie, als Füllstoff für Polymere, als Ausgangsstoff zur Herstellung von Glas oder Glasbeschichtungen oder Glasfasern, als Trennhilfsmittel, in der Kosmetikindustrie, als Absorbermaterial, als Additiv in der Silikon- und Kautschukindustrie, zur Einstellung der Rheologie von flüssigen Systemen, zur Hitzeschutzstabilisierung, als Wärmedämmaterial, als Fließhilfsmittel, in der Dentalindustrie, als Hilfsstoff in der pharmazeutischen Industrie, in der Lackindustrie, bei PET-Film-Anwendungen, in Fluoreszenz-Röhren, als Ausgangsstoff zur Herstellung von Filterkeramiken oder Filtern, in Tonerpulvern, als Rostschutzmittel, als Mittel zum Film-Coaten von Polyethylen (PET) und Polyvinylacetat, in Tinten, in Batterieseparatoren.

## Claims

1. A silicon-aluminium mixed oxide powder produced by flame hydrolysis and having a composition of from 1 to 99.999 wt.% Al₂O₃, the remainder being SiO₂, **characterized in that** the powder exhibits an amorphous structure in the X-ray diffraction pattern and consists of intergrown primary particles, wherein in these primary particles crystallites are present, and these crystallites have sizes of between one and 200 nanometres and the specific surface of the powder is between 5 and 300 m²/g.

2. A process for the production of the silicon-aluminium mixed oxide produced by flame hydrolysis according to claim 1, **characterized in that** silicon halide and aluminium halide are vaporised in a particular ratio to one another and are homogeneously mixed with air, oxygen and hydrogen in a mixing unit by means of a carrier gas, this mixture undergoes combustion in a burner of known construction without addition of diaphragm air by means of an annular nozzle and, after the separation of the solids from the vapour phase, any traces of halide possibly adhering to the product are separated off in a further processing step by means of moist air at elevated temperature.

3. The use of the silicon-aluminium mixed oxide produced by flame hydrolysis according to claim 1 for the production of dispersions which are used for polishing, in particular in the electronics industry (CMP).

4. The use of the silicon-aluminium mixed oxide produced by flame hydrolysis according to claim 1 as filler, as supporting material, as a catalytically active substance, as ceramic raw material, in the electronics industry, as filler for polymers, as starting material for the production of glass or glass coatings or glass fibres, as auxiliary separating agents, in the cosmetics industry, as absorbent material, as an additive in the silicone and rubber industry, for adjusting the rheology of liquid systems, for heat-protective stabilisation, as heat-insulating material, as flow-control agents, in the dental industry, as auxiliary agents in the pharmaceutical industry, in the paint industry, in PET-film applications, in fluorescent tubes, as starting material for the production of filter ceramics or filters, in powders for toners, as rust inhibitors, as agents for the film-coating of polyethylene (PET) and polyvinyl acetate, in inks and in battery separators.

## Revendications

1. Poudre d'oxyde mixte de silicium et d'aluminium fabriquée par hydrolyse à la flamme composée pour 1 à 99,999 % en poids d'Al₂O₃, le reste étant du SiO₂,
**caractérisée en ce qu'**
elle présente, sur le diffractogramme de rayons X, une structure amorphe et est constituée de particules primaires coalescentes, des cristallites étant présents dans ces particules primaires, et ces cristallites présentant des tailles comprises entre 1 et 200 nanomètres et la surface spécifique de la poudre étant comprise entre 5 et 300 m²/g.

2. Procédé de fabrication de l'oxyde de silicium et d'aluminium selon l'invention fabriqué par hydrolyse à la flamme,
**caractérisé en ce qu'**
on vaporise des halogénures de silicium et d'aluminium dans un certain rapport entre eux et **en ce qu'**on mélange de manière homogène dans un appareil de mélange, avec un gaz porteur, avec de l'air, de l'oxygène et de l'hydrogène, on brûle ce mélange dans un brûleur de type connu sans apport d'air écran au moyen d'une tuyère circulaire, et, après la séparation des matières solides de la phase gazeuse, on sépare le cas échéant les restes d'halogénure accrochés au produit avec de l'air humide à une température élevée lors d'une autre étape.

3. Utilisation de l'oxyde mixte de silicium et d'aluminium fabriqué par hydrolyse à la flamme selon la revendication 1, pour fabriquer des dispersions utilisées pour le polissage dans l'industrie électronique (CMP).

4. Utilisation de l'oxyde mixte de silicium et d'aluminium fabriqué par hydrolyse à la flamme selon la revendication 1, comme charge, comme matière support, comme substance à action catalytique, comme matière de base céramique, dans l'industrie électronique, comme charge pour les polymères, comme matière de départ pour fabriquer du verre ou des revêtements en verre ou des fibres de verre, comme agent de démoulage, dans l'industrie cosmétique, comme matière absorbante, comme additif dans l'industrie des silicones et du caoutchouc, pour ajuster la rhéologie de systèmes liquides, pour stabiliser la protection contre les très hautes températures, comme isolant thermique, comme auxiliaire de fluidité, dans l'industrie dentaire, comme excipient dans l'industrie pharmaceutique, dans l'industrie des peintures et vernis, dans les applications de film PET, dans les tubes de fluorescence, comme matière de départ dans la fabrication de céramiques de filtration ou de filtres, dans les poudres d'argile, en tant qu'agent anticorrosion, en tant qu'agent de filmage du polyéthylène (PET) et de l'acétate de polyvinyle, dans les encres, dans les séparateurs de batteries.
